# EUROPÄISCHE PATENTSCHRIFT

(11) **EP 1 612 967 B1**
(45) Veröffentlichungstag und Bekanntmachung des Hinweises auf die Patenterteilung: **01.05.2013**
(21) Anmeldenummer: 05104923.7
(22) Anmeldetag: 07.06.2005
(51) Int. Cl.: H04B 7/08

(54) **Rundfunkempfänger mit mehreren Antennen und mehreren Empfängern**
Broadcast receiver with several antennas and several receivers
Récepteur de radiodiffusion avec plusieurs antennes et plusieurs récepteurs

(30) Priorität: 03.07.2004 DE 102004032348
(43) Veröffentlichungstag der Anmeldung: 04.01.2006
(73) Patentinhaber: ROBERT BOSCH GMBH, 70442 Stuttgart (DE)
(72) Erfinder: Passoke, Jens, 30539 Hannover (DE)

(56) Entgegenhaltungen:
- WO-A1-01/59945
- WO-A1-02/03570
- GB-A- 2 353 673
- US-A1- 2003 017 833

## Beschreibung

Die Erfindung betrifft einen Rundfunkempfänger, insbesondere ein Autoradio, mit mindestens zwei Antennen und mindestens zwei Empfängern für Antenneneingangssignale.

Der mobile Empfang eines frequenzmodulierten (FM) Rundfunksignals mit einem FM-Rundfunkempfänger wird durch verschiedene Einflüsse gestört. Hierzu gehören unter anderem die Abschattung und der Mehrwegeempfang. Dabei wird im ersten Fall der Abschattung das zu empfangene Signal stark gedämpft, so dass die Antenne aus der entsprechenden Richtung keine elektromagnetische Welle empfangen kann. Im zweiten Fall des Mehrwegeempfangs überlagern sich die elektromagnetischen Wellen zweier Richtungen derart, dass es am Ort der Empfangsantenne zu einer starken Reduktion der Feldstärke bis hin zur Auslöschung kommt. Diese Effekte führen bei einem mobilen Rundfunkempfänger zu starken Beeinträchtigungen der Empfangsqualität.

Um diese Nachteile mobiler Rundfunkempfänger, die zum Beispiel als Autoradios in einem Kraftfahrzeug Einsatz finden, auszugleichen, werden in höherwertigen Empfangssystemen Schaltungen eingesetzt, bei denen die Signale zweier dekorrelierter Antennen unter anderem gefiltert, auf eine Zwischenfrequenz (ZF) umgesetzt und abgetastet werden. Anschließend werden die abgetasteten ZF-Signale mit komplexen Koeffizienten bewertet und addiert. Hierdurch kann die Empfangsperformance deutlich verbessert werden. Dieser Betriebsmodus wird im Folgenden DDA-Betrieb genannt.

Nachteilig bei diesem System ist der erhöhte Aufwand, da die Antennen und ein Teil des Signalpfades zweimal vorhanden sein müssen.

Falls eine solche Maßnahme zur Empfangsverbesserung auf Grund sehr guter Empfangsverhältnisse nicht notwendig ist, ist es bekannt, dass der zweite Empfangspfad im Hintergrund die Aufgabe übernimmt, den Empfang auf verschiedenen alternativen Frequenzen zu bewerten. Hierfür wird bevorzugt das exakt gleiche Empfangssignal verwendet, dass dem Vordergrundempfänger zur Verfügung steht. Dies ist aber bei dekorrelierten Antennen in der Regel nicht gegeben, so dass hier das gleiche Antennensignal genutzt werden sollte.

Hochwertige Empfangssignale bieten zudem die Möglichkeit des Empfangs von sogenannten Trafic Massage Channel (TMC) - Daten zur Übertragung von Verkehrsinformationen und zur Verkehrslenkung. Dabei soll der Empfang der TMC-Daten auf einer von der im Audiopfad eingestellten unabhängigen Frequenz möglich sein. Während einer der zwei Empfangspfade das Audiosignal liefert, kann die Aufgabe des TMC-Datenempfangs der zweite Empfangspfad übernehmen. Der die TMC-Daten empfangene Signalpfad kann ebenfalls die Senderlandschaft durch Auswertung der Radio-Daten-System-Informationen RDS beobachten, indem in Zeitschlitzen das Frequenzband gescannt wird, in denen keine TMC relevanten Daten empfangen werden. Hierfür sollte beiden Pfaden exakt das gleiche Signal zur Verfügung stehen. Wird eine bessere Alternativfrequenz empfangen, kann der das Audiosignal empfangende Empfänger (Tuner) ohne weitere Tests auf die entsprechende Frequenz springen.

Aus der WO 01/59945 A1 ist eine mobile Kommunikationseinrichtung mit wenigstens zwei Empfängern und einer Speichereinheit bekannt Die mobile Kommunikationseinrichtung kann in einem einfachen Empfängerbetrieb oder in einem zweifachen Empfängerbetrieb betrieben werden. Eine Schalteinheit verbindet hierzu die Empfänger mit Antennen entsprechend dem gewünschten Betrieb. Hierbei können gegebenenfalls verschiedene Diversity-Techniken verwendet werden.

Aufgabe der Erfindung ist es, einen verbesserten Rundfunkempfänger, insbesondere ein verbessertes Autoradio, mit mindestens zwei Antennen und mindestens zwei Empfängern für Antenneneingangssignale zu schaffen, das die oben genannten Anforderungen erfüllt und im Falle von Empfangsstörungen angemessen reagiert.

Die Aufgabe wird mit dem gattungsgemäßen Rundfunkempfänger gelöst durch eine Schalteinheit zwischen den Antennen und den Empfängern, um wahlweise die Empfänger mit einem von dem jeweiligen Antenneneingangssignal des mindestens einen anderen Empfängers dekorreliertem Antenneneingangssignal oder die Empfänger mit dem gleichen Antenneneingangssignal zu versorgen.

Damit ist es mit einer einfachen Maßnahme möglich, dass einerseits beide Empfängereingänge jeweils ein unkorreliertes Signal von den zwei dekorrelierten Antennensignalen zur Verfügung gestellt wird und andererseits beide Empfänger das gleiche Signal durch eine elektronische Umschaltung empfangen.

Für den Fall einer Empfangsstörung beispielsweise durch Abschattung und Mehrwegeempfang, kann dann durch einen Mikrocontroller des Rundfunkempfängers gesteuert die Schalteinheit umschalten, um die Empfänger mit dem gleichen ungestörteren bzw. optimaleren Antenneneingangssignal zu versorgen.

Die Schalteinheit ist vorzugsweise zur wahlweisen Verbindung der Empfänger mit jeweils einer zugeordneten Antenne oder zur Verbindung mehrerer Empfänger an die gleiche Antenne und zur Abschaltung der mindestens einen anderen Antenne ausgebildet.

In einer bevorzugten Ausführungsform hat die Schalteinheit einen induktiven Koppler mit einer mit den Wicklungsenden an die Empfänger geschalteten Primärwicklung und eine Sekundärwicklung. Eine Antenne ist mit einem Mittelabgriff der Primärwicklung verbunden und eine andere Antenne mit einem Schalter abschaltbar mit einer Sekundärwicklung verbunden. Die Sekundärwicklung ist mit dem anderen Ende auf Massepotential gelegt.

Mit einem solchen Koppler, der auch unter dem Begriff Combiner bekannt ist, kann die Antennensignaleinspeisung in den Empfänger optimiert werden. Für den Fall, dass mindestens eine andere Antenne abgeschaltet ist, verhält sich der offene hochohmige Eingang des an den Schalter geklemmten Endes der Sekundärwicklung in diesem Falle elektrisch neutral.

Der Rundfunkempfänger ist vorzugsweise beispielsweise über eine Mensch-Maschine-Schnittstelle (HMI = Human Machine Interface) zwischen den Betriebsmodi umschaltbar. Betriebsmodi sind beispielsweise der sogenannte DDA-Betrieb (Digital-Directional-Antenna), in dem von den Empfängern der gleiche Empfangspfad genutzt wird, und der Vordergrund- /Hintergrundbetrieb, in dem von den Empfängern unterschiedliche Empfangspfade genutzt werden, z. B. für den TMC-Empfang über einen anderen Kanal als der im Vordergrund empfangene Kanal. Die Umschaltung kann absolut sein oder geräteseitig mit der aktuellen Empfangssituation bewertet werden. Bei guten Empfangssituationen können so mehrere TMC-Sender gescannt werden.

Die Erfindung wird nachfolgend an Hand der beigefügten Zeichnung beispielhaft näher erläutert. Es zeigt:

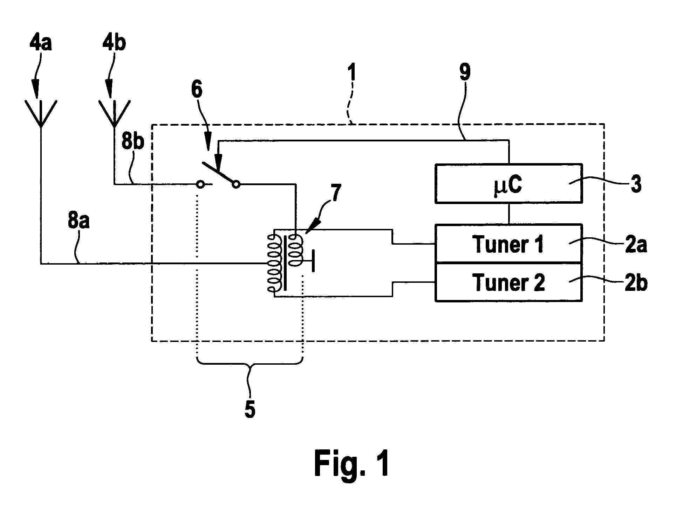

Figur 1 - Blockdiagramm eines Rundfunkempfängers mit einer Ausführungsform der erfindungsgemäßen Schalteinheit.

Die Figur 1 lässt einen Rundfunkempfänger 1 mit einem ersten Empfänger 2a und einem zweiten Empfänger 2b erkennen. Die Empfänger 2a, 2b sind an einem Mikrocontroller 3 angeschlossen, der im übrigen auch zur Steuerung des Rundfunkempfänger 1 in bekannter Weise genutzt wird. Weiterhin ist eine erste Antenne 4a und eine zweite Antenne 4b vorhanden.

Erfindungsgemäß ist eine Schalteinheit 5 vorgesehen, die einen Schalter 6 und einen induktiven Koppler 7 (Combiner) hat. Der induktive Koppler 7 arbeitet als Summierstufe, die aus den beiden Antennensignalen 8a, 8b der Antennen 4a, 4b Summensignale mit zwei Phasenbeziehungen ₁ = 0° und ₂ = 180° erzeugen kann. Der induktive Koppler 7 besteht aus einem sogenannten Hochfrequenz-Combiner, der eine erste Primärwicklung mit Mittenanzapfung und eine zweite Sekundärwicklung ohne Zusatzabgriff aufweist.

Die beiden äußeren Enden der Primärwicklung sind an den ersten und zweiten Empfänger 2a, 2b geschaltet. Die erste Antenne 4a ist mit der Mittenanzapfung des induktiven Kopplers 7 verbunden.

Das erste Ende der Sekundärwicklung ist auf Masse gelegt und das zweite Ende der Sekundärwicklung ist mit dem Schalter 6 verbunden, dessen anderer Anschluss mit der zweiten Antenne 4b verbunden ist. Der Schalter 6 wird durch den Mikrocontroller 3 über ein Steuersignal 9 angesteuert.

Wenn der Schalter 6 geschlossen ist, gelangen beide Antennensignale 4a, 4b auf den induktiven Koppler 7. Die an den beiden Empfängern 2a, 2b anliegenden Antenneneingangssignale sind somit jeweils eine Kombination beider Antennensignale 8a, 8b, wobei die Kombination mit unterschiedlicher Phase erfolgt. Somit sind die Antenneneingangssignale nicht korreliert.

Wenn der Schalter 6 geöffnet ist, gelangt hingegen nur das erste Antennensignal 8a an die Primärwicklung des induktiven Kopplers 7 und beide Empfänger 2a, 2b erhalten das gleiche Antenneneingangssignal. Der offene, hochohmige Eingang des mit dem Schalter 6 verbundenen Endes der Sekundärwicklung des induktiven Kopplers 7 verhält sich in diesem Falle elektrisch neutral.

## Patentansprüche

1. Rundfunkempfänger (1), insbesondere Autoradio, mit mindestens zwei Antennen (4a, 4b) und mindestens zwei Empfängern (2a, 2b) für Antenneneingangssignale (8a,8b), **wobei** eine Schalteinheit (5) zwischen den Antennen (4a, 4b) und den Empfängern (2a,2b) vorgesehen ist, um wahlweise die Empfänger mit einem von dem jeweiligen Antenneneingangssignal (8a, 8b) des mindestens einen anderen Empfängers (2a,2b) dekorreliertem Antenneneingangssignal (8a, 8b) oder die Empfänger (2a, 2b) mit dem gleichen Antenneneingangssignal (8a, 8b) zu versorgen.

2. Rundfunkempfänger (1) nach Anspruch 1, **dadurch gekennzeichnet, dass** die Schalteinheit (5) zur wahlweisen Verbindung der Empfänger (2a, 2b) mit jeweils einer zugeordneten Antenne (4a, 4b) oder zur Verbindung mehrerer Empfänger (2a, 2b) an die gleiche Antenne (4a, 4b) und Abschaltung der mindestens einen anderen Antenne (4a, 4b) ausgebildet ist.

3. Rundfunkempfänger (1) nach Anspruch 1, **dadurch gekennzeichnet, dass** die Schalteinheit (5) einen induktiven Koppler (7) mit einer Primärwicklung, deren Wicklungsenden an die Empfänger (2a, 2b) geschaltet sind, und einer Sekundärwicklung hat, wobei eine der Antennen (4a, 4b) mit einem Mittelabgriff der Primärwicklung verbunden ist und eine andere Antenne (4a, 4b) mit einem Schalter (6) abschaltbar mit einer Sekundärwicklung verbunden und die Sekundärwicklung auf Massepotential gelegt ist.

4. Rundfunkempfänger (1) nach einem der vorhergehenden Ansprüche, **gekennzeichnet durch** einen Mikrocontroller zur Steuerung der Schalteinheit (5).

## Claims

1. Broadcast radio receiver (1), particularly a car radio, having at least two antennas (4a, 4b) and at least two receivers (2a, 2b) for antenna input signals (8a, 8b), wherein a switching unit (5) is provided between the antennas (4a, 4b) and the receivers (2a, 2b) in order either to supply the receivers with an antenna input signal (8a, 8b) that is decorrelated from the respective antenna input signal (8a, 8b) from the at least one other receiver (2a, 2b) or to supply the receivers (2a, 2b) with the same antenna input signal (8a, 8b).

2. Broadcast radio receiver (1) according to Claim 1, **characterized in that** the switching unit (5) is designed either to connect the receivers (2a, 2b) to a respective associated antenna (4a, 4b) or to connect a plurality of receivers (2a, 2b) to the same antenna (4a, 4b) and to disconnect the at least one other antenna (4a, 4b).

3. Broadcast radio receiver (1) according to Claim 1, **characterized in that** the switching unit (5) has an inductive coupler (7) having a primary winding, the winding ends of which are connected to the receivers (2a, 2b), and a secondary winding, wherein one of the antennas (4a, 4b) is connected to a centre tap of the primary winding and another antenna (4a, 4b) is connected to a secondary winding so as to be able to be disconnected by means of a switch (6), and the secondary winding is connected to earth potential.

4. Broadcast radio receiver (1) according to one of the preceding claims, **characterized by** a microcontroller for controlling the switching unit (5).

## Revendications

1. Récepteur de radiodiffusion (1), notamment autoradio, comprenant au moins deux antennes (4a, 4b) et au moins deux récepteurs (2a, 2b) pour des signaux d'entrée d'antenne (8a, 8b), une unité de commutation (5) étant prévue entre les antennes (4a, 4b) et les récepteurs (2a, 2b) pour alimenter, au choix, les récepteurs avec un signal d'entrée d'antenne (8a, 8b) décorrélé du signal d'entrée d'antenne respectif (8a, 8b) de l'au moins un autre récepteur (2a, 2b) ou les récepteurs (2a, 2b) avec le même signal d'entrée d'antenne (8a, 8b).

2. Récepteur de radiodiffusion (1) selon la revendication 1, **caractérisé en ce que** l'unité de commutation (5) est configurée pour relier, au choix, les récepteurs (2a, 2b) avec à chaque fois une antenne associée (4a, 4b) ou pour relier plusieurs récepteurs (2a, 2b) à la même antenne (4a, 4b) et pour déconnecter l'au moins une autre antenne (4a, 4b).

3. Récepteur de radiodiffusion (1) selon la revendication 1, **caractérisé en ce que** l'unité de commutation (5) comprend un coupleur inductif (7) muni d'un enroulement primaire dont les extrémités d'enroulement sont connectées aux récepteurs (2a, 2b) et d'un enroulement secondaire, l'une des antennes (4a, 4b) étant reliée avec une prise centrale de l'enroulement primaire et une autre antenne (4a, 4b) étant reliée de manière déconnectable par un commutateur (6) avec un enroulement secondaire et l'enroulement secondaire étant mis au potentiel de la masse.

4. Récepteur de radiodiffusion (1) selon l'une des revendications précédentes, **caractérisé par** un microcontrôleur pour commander l'unité de commutation (5).
